# EUROPÄISCHE PATENTSCHRIFT

(11) **EP 2 440 428 B1**
(45) Veröffentlichungstag und Bekanntmachung des Hinweises auf die Patenterteilung: **03.04.2013**
(21) Anmeldenummer: 10722712.6
(22) Anmeldetag: 09.06.2010
(51) Int. Cl.: B60N 2/28, E05B 65/12, F16B 19/10

(54) **KRAFTFAHRZEUG MIT EINEM U-FÖRMIGEN BÜGEL**
VEHICLE WITH A U-SHAPED BRACKET
VÉHICULE AUTOMOBILE AVEC UN CROCHET EN U

(30) Priorität: 10.06.2009 DE 102009024453
(43) Veröffentlichungstag der Anmeldung: 18.04.2012
(73) Patentinhaber: Bayerische Motoren Werke Aktiengesellschaft, 80809 München (DE)
(72) Erfinder: OANCEA, Nikolaus, 80939 München (DE)
(86) Internationale Anmeldenummer: PCT/EP2010/058041
(87) Internationale Veröffentlichungsnummer: WO 2010/142704

(56) Entgegenhaltungen:
- EP-A1- 0 642 955
- FR-A1- 2 302 442
- US-A- 5 924 611
- US-B1- 6 176 660

## Beschreibung

Die Erfindung betrifft ein Kraftfahrzeug mit einem U-förmigen Bügel nach dem Oberbegriff des Patentanspruchs 1.

Viele heutige Kraftfahrzeuge weisen einen U-förmigen Bügel auf, der mit seinen beiden Enden an einem flächigen Blechbauteil befestigt ist. Ein solcher U-förmiger Bügel kann beispielsweise zur Befestigung eines Kindersitzes im Kraftfahrzeug gemäß dem sogenannten Isofix-Standard dienen, er kann als Schließbügel für ein Schloss einer Tür oder Klappe des Kraftfahrzeugs zum Einsatz kommen, er kann im Kofferraum zur Sicherung von Ladegut vorgesehen sein, etc. Üblicherweise ist der U-förmige Bügel zur Befestigung an dem flächigen Blechbauteil mit einer Trägerplatte verbunden, die flächig an dem Blechbauteil anliegt. Die Trägerplatte wiederum ist mit dem Blechbauteil verschweißt, verschraubt oder vernietet.

Aus der EP 0 642 955 A1 ist bereits ein Kraftfahrzeug mit einem U-förmigen Bügel bekannt, der mit beiden Enden an einem flächigen Blechbauteil befestigbar ist.

Ferner ist aus der DE 295 09 439 U1 ein Stanzniet mit einem am Nietkopf angeformten Gewindebolzen bekannt. Darüber hinaus ist aus der DE 41 00 709 A1 eine Blindnietmutter mit einem Zugdorn bekannt, wobei der Zugdorn als vormontierte Kopfschraube ausgebildet ist, deren Kopf das Widerlager für ein Setzwerkzeug bildet.

Aufgabe der Erfindung ist es, ein Kraftfahrzeug mit einem U-förmigen Bügel zu schaffen, der auf einfache Weise an einem Blechbauteil befestigbar ist.

Diese Aufgabe wird mit einem Kraftfahrzeug mit einem U-förmigen Bügel mit den Merkmalen des Patentanspruchs 1 gelöst.

Erfindungsgemäß ist der U-förmige Bügel an seinen beiden Enden jeweils als Blindniet ausgestaltet, wobei der U-förmige Bügel selber den Zugdorn der Blindnieten bildet. Ein Blindniet ist eine spezielle Form von Niet, welche nur den Zugang zu einer Seite der zu verbindenden Bauteile erfordert und mit einem speziellen Setzwerkzeug befestigt wird. Beim Blindnieten erfolgt der Fügevorgang von nur einer Seite des Bauteils aus. Der Blindniet wird durch die Bohrung eingeführt, anschließend wird der am Kopf herausragende Zugdorn mit dem Setzwerkzeug herausgezogen. Dies führt zu einer Stauchung und somit zu einer Aufweitung des Niets hinter der Bohrung. Als Zugdorne dienen erfindungsgemäß die Endabschnitte des U-förmigen Bügels.

Der erfindungsgemäße U-förmige Bügel wird zur Befestigung an dem Blechbauteil mit seinen beiden Enden durch je ein Durchgangsloch in dem Blechbauteil hindurch gesteckt. Anschließend werden die Enden in den Durchgangslöchern wie normale Blindniete vernietet. Als Zugdorne dienen dabei die Endabschnitte des U-förmigen Bügels. Als günstiger Angriffspunkt zum Herausziehen der Zugdorne kann beispielsweise der mittlere Abschnitt des U-förmigen Bügels dienen.

Weitere vorteilhafte Ausgestaltungen sind Gegenstand von Unteransprüchen.

In der Zeichnung ist ein Ausführungsbeispiel der Erfindung dargestellt, anhand dessen die Erfindung im Folgenden näher beschrieben wird. Die einzelnen Figuren zeigen in schematischer Darstellungsweise:
- Fig. 1: einen U-förmigen Bügel, der mit seinen beiden Enden durch zwei Durchgangslöcher in einem flächigen Blechbauteil einer Karosserie eines Kraftfahrzeugs durchgesteckt ist, und
- Fig. 2: die Anordnung aus Fig. 1 nach dem Vernieten des U-förmigen Bügels mit dem Blechbauteil.

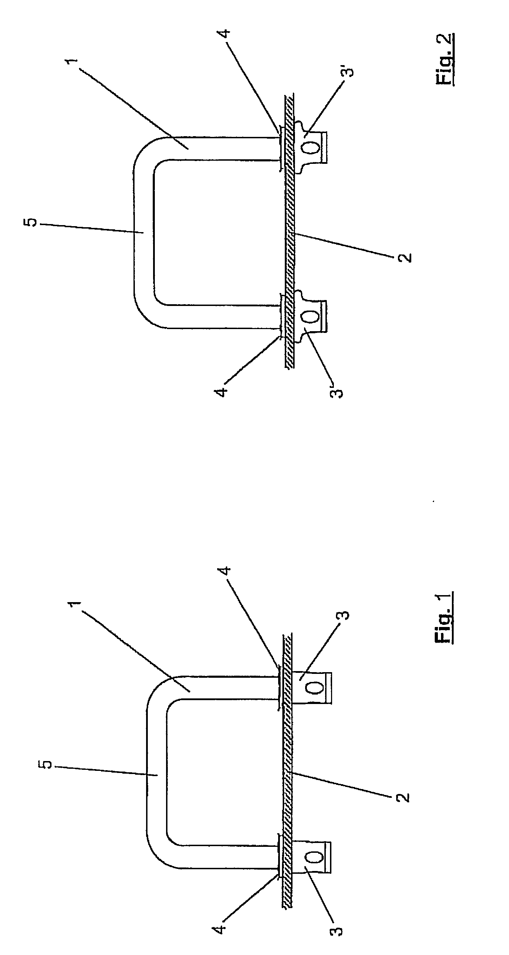

In Fig. 1 ist ein U-förmiger Bügel 1 dargestellt, der an einem flächigen Blechbauteil 2 einer Fahrzeugkarosserie befestigt werden soll. Dazu ist der U-förmige Bügel 1 an seinen beiden Enden jeweils als Blindniet ausgestaltet. Die Endabschnitte des U-förmigen Bügels 1 sind jeweils mit einer Niethülse 3 axial umgeben, wobei sich jeweils ein Hohlraum zwischen der Niethülse 3 und dem Endabschnitt des U-förmigen Bügels 1 befindet. An ihren den Enden des U-förmigen Bügels 1 zugewandten Enden sind die Niethülsen 3 mit den Enden des U-förmigen Bügels 1 verbunden, sodass die Endabschnitte des U-förmigen Bügels 1 als Zugdorn für den Blindniet dienen können. An den von den Enden des U-förmigen Bügels 1 wegweisenden Enden weisen die Niethülsen 3 jeweils einen radial nach außen abstehenden Kragen 4 auf.

Zum Vernieten des U-förmigen Bügels 1 mit dem Blechbauteil 2 werden nun die Enden des U-förmigen Bügels 1 - wie in Fig. 1 gezeigt - jeweils durch ein Durchgangsloch in dem Blechbauteil 2 durchgesteckt, bis die Krägen 4 der Niethülsen 3 auf dem Blechbauteil 2 anliegen. Der Durchmesser der Durchgangslöcher entspricht dabei etwa dem Außendurchmesser der Niethülsen 3.

Das Setzwerkzeug zum Vernieten des U-förmigen Bügels 1 stützt sich auf den Krägen 4 der Niethülsen 3 ab. Der mittlere Abschnitt 5 des U-förmigen Bügels 1 dient als Widerlager, das relativ zu den Krägen 4 der Niethülsen 3 nach oben weg von dem flächigen Blechbauteil 2 gezogen wird. Dadurch werden - wie in Fig. 2 gezeigt - die Niethülsen 3' gestaucht, sodass der U-förmige Bügel 1 formschlüssig durch die Krägen 4 einerseits und die gestauchten Niethülsen 3' andererseits in den Durchgangslöchern des Blechbauteils 2 gehalten ist.

Auf diese Weise kann der der U-förmige Bügel 1 ausschließlich von einer Seite des Blechbauteils 2 an diesem befestigt werden. Er muss nicht angeschweißt oder angeschraubt werden. Die Befestigung durch das Vernieten ist sehr schnell, prozesssicher und kostengünstig herstellbar. Es ist keine zusätzliche Trägerplatte erforderlich.

## Patentansprüche

1. Kraftfahrzeug mit einem U-förmigen Bügel (1), der mit beiden Enden an einem flächigen Blechbauteil (2) befestigbar ist, **dadurch gekennzeichnet, dass** der U-förmige Bügel (1) an seinen beiden Enden jeweils als Blindniet ausgestaltet ist, wobei der U-förmige Bügel (1) selber den Zugdorn der Blindnieten bildet.

2. Kraftfahrzeug nach Anspruch 1, **dadurch gekennzeichnet, dass** jeweils eine Niethülse die Endabschnitte des U-förmigen Bügels (1) axial umgibt, wobei sich jeweils ein Hohlraum zwischen der Niethülse (3) und dem Endabschnitt des U-förmigen Bügels (1) befindet.

3. Kraftfahrzeug nach Anspruch 2, **dadurch gekennzeichnet, dass** die Niethülsen (3) an ihren von den Enden des U-förmigen Bügels (1) wegweisenden Enden jeweils einen radial nach außen abstehenden Kragen (4) aufweisen.

4. Kraftfahrzeug nach Anspruch 2 oder 3, gekennzeichnet, dass die Niethülsen (3) an ihren den Enden des U-förmigen Bügels (1) zugewandten Enden mit den Enden des U-förmigen Bügels (1) verbunden sind.

5. Kraftfahrzeug nach einem der vorhergehenden Ansprüche, **dadurch gekennzeichnet, dass** der mittlere Abschnitt (5) des U-förmigen Bügels (1) als Widerlager für ein Setzwerkzeug dient.

6. Kraftfahrzeug nach einem der vorhergehenden Ansprüche, **dadurch gekennzeichnet, dass** das Blechbauteil (2) zur Befestigung des U-förmigen Bügels (1) zwei Durchgangslöcher aufweist, deren Durchmesser etwa dem Außendurchmesser der Niethülsen (3) entsprechen.

## Claims

1. A motor vehicle with a U-shaped member (1) fastened at both ends to a flat sheet-metal component (2), **characterised in that** each end of the U-shaped member (1) is in the form of a blind rivet, wherein the U-shaped member (1) itself constitutes the mandrel of the blind rivets.

2. A motor vehicle according to claim 1, **characterised in that** a rivet sleeve axially surrounds each end portion of the U-shaped member (1), wherein a cavity is formed between the rivet sleeve (3) and the end portion of the U-shaped member (1).

3. A motor vehicle according to claim 2, **characterised in that** the ends of the sleeves (3) pointing away from the ends of the U-shaped member (1) each have a radially outwardly projecting collar (4).

4. A motor vehicle according to claim 2 or claim 3, **characterised in that** the ends of the sleeves (3) facing the ends of the U-shaped member (1) are connected to the ends of the U-shaped member (1).

5. A motor vehicle according to any of the preceding claims, **characterised in that** the central portion (5) of the U-shaped member (1) serves as an abutment for a setting tool.

6. A motor vehicle according to any of the preceding claims, **characterised in that** the sheet-metal component (2) for fastening the U-shaped member (1) has two through holes, approximately equal in diameter to the outer diameter of the rivet sleeves (3).

## Revendications

1. Véhicule automobile comprenant un arceau en forme de U (1) qui peut être fixé par ses deux extrémités sur un élément de tôle plan (2),
**caractérisé en ce que**
l'arceau en forme de U (1) est réalisé à ses deux extrémités sous la forme d'un rivet aveugle, l'arceau en forme de U (1) formant lui-même la tige de traction du rivet aveugle.

2. Véhicule automobile conforme à la revendication 1,
**caractérisé en ce qu'**
un élément de rivet tubulaire entoure axialement les extrémités respectives de l'arceau en forme de U (1), une chambre creuse étant respectivement située entre les éléments de rivet tubulaires (3) et les extrémités de l'arceau en forme de U (1).

3. Véhicule automobile conforme à la revendication 2,
**caractérisé en ce que**
les éléments de rivet tubulaires (3) comportent respectivement à leur extrémité opposée à l'arceau en forme de U (1) une collerette (4) s'évasant radialement vers l'extérieur.

4. Véhicule automobile conforme à la revendication 2 ou 3,
**caractérisé en ce que**
les éléments de rivet tubulaires (3) sont reliés à leurs extrémités tournées vers les extrémités de l'arceau en forme de U (1) avec les extrémités cet arceau en forme de U (1).

5. Véhicule automobile conforme à l'une des revendications précédentes,
**caractérisé en ce que**
la branche médiane (5) de l'arceau en forme de U (1) fait office de butée support pour un outil à positionner.

6. Véhicule automobile conforme à l'une des revendications précédentes,
**caractérisé en ce que**
l'élément en tôle (2) comporte, pour permettre la fixation de l'arceau en forme de U (1) deux orifices traversant dont les diamètres correspondent essentiellement au diamètre extérieur des éléments de rivet tubulaires (3).
